(19) Europäisches Patentamt
European Patent Office
Office européen des brevets

(11) **EP 4 654 081 A1**

(12) **EUROPEAN PATENT APPLICATION**

(43) Date of publication:
**26.11.2025 Bulletin 2025/48**

(21) Application number: **25175624.3**

(22) Date of filing: **12.05.2025**

(51) International Patent Classification (IPC):
**G06N 3/0455** $^{(2023.01)}$    **G06N 3/047** $^{(2023.01)}$
**G06N 3/0475** $^{(2023.01)}$    **G06N 3/082** $^{(2023.01)}$

(52) Cooperative Patent Classification (CPC):
**G06N 3/047; G06N 3/0455; G06N 3/0475;**
**G06N 3/082;** G06N 3/0495; G06N 3/09; G06N 7/01

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **21.05.2024   US 202463650334 P**
**11.02.2025   US 202519050938**

(71) Applicant: **Samsung Electronics Co., Ltd.**
**Suwon-si, Gyeonggi-do 16677 (KR)**

(72) Inventors:
• **CHOI, Chiho**
  **San Jose, CA, 95134 (US)**
• **MALLA, Srikanth**
  **San Jose, CA, 95134 (US)**
• **PADMANABHAN, Sai Prahladh**
  **San Jose, CA, 95134 (US)**
• **CHOI, Joon Hee**
  **San Jose, CA, 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **SYSTEMS AND METHODS FOR EMBEDDING VARIATIONAL GENERATIVE DYNAMICS TO A MACHINE-LEARNING MODEL**

(57)    Provided is a method for modifying a machine-learning model. The method includes performing, by a machine learning model (122), a generative process to predict a first output (125), generating, via a processor (110), a latent space based on an input (121) to the machine learning model (122), determining, via the processor (110), an intermediate decision parameter (124) based on the latent space, based on the intermediate decision parameter (124), changing, via the processor (110), a structure of the machine learning model (122) to generate a modified machine learning model (126) to perform a modified generative process that is conditioned upon the intermediate decision parameter (124), and generating, by the modified machine learning model (126), a second output (125) including content associated with the input (121).

**FIG. 1A**

EP 4 654 081 A1

## Description

### FIELD

Aspects of some embodiments of the present disclosure relate to systems and methods for data processing.

### BACKGROUND

Conditional generative models may be utilized across various domains due to their ability to capture complex data distributions while allowing for conditional generation based on a given context. Variational generative autoencoders are widely used models, which are enabled to learn latent representations that generate controlled and diverse outputs by conditioning on specific input variables. Variational generative autoencoders may model the dependency between a latent variable and a data point given a condition. Variational generative autoencoders have emerged as a powerful tool in machine learning tasks including language modeling, image generation, and autonomous systems.

Despite their success in many scenarios, there may be limitations associated with variational generative autoencoders in that the output may be generated solely based on the latent variable and the input as a condition. Thus, in some cases, variational generative autoencoders may lack the flexibility to incorporate intermediate control factors that may play a critical role in the generation process, restricting a model's ability to capture more complex dependencies and thus potentially limiting its applicability in real-world scenarios.

The field of artificial intelligence (AI) has experienced advancements in machine-learning models (e.g., language models). For example, large language models (LLMs) have been developed for a variety of natural language processing tasks, resulting in the development of related AI-based services. However, extensive model sizes and heavy computational costs of LLMs pose significant challenges for model training and inference, particularly in resource-constrained environments. Systems and methods may be suitable for reducing model complexity to suit the computational operations of a variety of hardware platforms (e.g., conventional hardware platforms) and for dynamically adjusting LLMs to different downstream tasks.

The present background section is intended to provide context only, and the disclosure of any embodiment or concept in this section does not constitute an admission that said embodiment or concept is prior art.

### SUMMARY

Aspects of some embodiments of the present disclosure are directed to computing systems with improved memory management.

According to some embodiments of the present disclosure, there is provided a method for modifying a machine-learning model, the method including performing, by a machine learning model, a generative process to predict a first output, generating, via a processor, a latent space based on an input to the machine learning model, determining, via the processor, an intermediate decision parameter based on the latent space, based on the intermediate decision parameter, changing, via the processor, a structure of the machine learning model to generate a modified machine learning model to perform a modified generative process that is conditioned upon the intermediate decision parameter, and generating, by the modified machine learning model, a second output including content associated with the input.

The second output may be conditioned upon a latent variable and the intermediate decision parameter.

The generating the latent space may include embedding the input and a previously generated output from the machine learning model into a data distribution.

The intermediate decision parameter may be determined based on the input and a relationship inferred from the embedding.

The determining the intermediate decision parameter may include sampling the latent space based on a latent variable.

The changing the structure of the machine learning model may include modifying the generative process to infer an indirect relationship between the latent variable and the second output.

The machine learning model may be a large language model.

The changing the structure of the machine learning model may include performing a structured pruning task for the large language model.

The changing the structure of the machine learning model may include applying the structured pruning task to dynamically prune the large language model utilizing rules conditioned on the intermediate decision parameter.

The applying the structured pruning task may dynamically remove from the large language model at least one of parameters, heads, nodes, edges, or weights.

The applying the structured pruning task may generate a pruned large language model that is reduced in size from the large language model and may generate an output that is conditioned upon the intermediate decision parameter.

The structured pruning task may include rules conditioned on the intermediate decision parameter and the latent variable.

The method may further include determining a second intermediate decision parameter based on a second latent variable and based on a second intermediate decision parameter, and generating a structured modification task conditioned upon the second intermediate decision parameter.

The content may include automatically generated images, text, audio, and video based on the input.

According to some other embodiments of the present disclosure, there is provided a device including one or more processors that are configured to perform a generative process to predict a first output using a machine learning model, generating a latent space based on an input to the machine learning model, determining an intermediate decision parameter based on the latent space, based on the intermediate decision parameter, changing a structure of the machine learning model to generate a modified machine learning model to perform a modified generative process that is conditioned upon the intermediate decision parameter, and generating, based on the modified machine learning model, a second output including content associated with the input.

The one or more processors may be configured to perform the generating the second output conditioned upon the intermediate decision parameter.

The one or more processors may be further configured to perform the generating the latent space by embedding the input and a previously generated output from the machine learning model into a data distribution.

The one or more processors may be further configured to perform the determining the intermediate decision parameter by sampling the latent space based on a latent variable.

The one or more processors may be further configured to perform the changing the structure of the machine learning model by performing a structured pruning task.

According to some other embodiments of the present disclosure, there is provided a system including a processing circuit, and a memory storing instructions, which, based on being executed by the processing circuit, cause the processing circuit to perform a generative process to predict a first output using a machine learning model, generating a latent space based on an input to the machine learning model, determining an intermediate decision parameter based on the latent space, based on the intermediate decision parameter, changing a structure of the machine learning model to generate a modified machine learning model to perform a modified generative process that is conditioned upon the intermediate decision parameter, and generating, based on the modified machine learning model, a second output including content associated with the input.

## BRIEF DESCRIPTION OF THE DRAWINGS

Non-limiting and non-exhaustive embodiments of the present disclosure are described with reference to the following figures, wherein like reference numerals refer to like parts throughout the various views unless otherwise specified.

FIG. 1A is a block diagram depicting a computer device for dynamically modifying a machine learning model that is conditioned on an intermediate decision parameter, according to some embodiments of the present disclosure.

FIG. 1B is a block diagram depicting a variational generative (VG) Machine Learning (ML) Model processor (e.g., a VG-ML processor) in the computer device of FIG. 1A in an example configuration for dynamically modifying a large language model that is conditioned on an intermediate decision, according to some embodiments of the present disclosure.

FIG. 2 is a diagram depicting relationships relating to the intermediate decision implemented by the VG-ML model processor in FIG. 1B, according to some embodiments of the present disclosure.

FIG. 3 is a flowchart depicting operations of a method for dynamically modifying a machine learning model that is conditioned on an intermediate decision parameter, according to some embodiments of the present disclosure.

FIG. 4 is a flowchart depicting operations of a method for modifying a machine-learning model, according to some embodiments of the present disclosure.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

## DETAILED DESCRIPTION

Aspects of the present disclosure and methods of accomplishing the same may be understood more readily by reference to the detailed description of one or more embodiments and the accompanying drawings. Hereinafter, embodiments will be described in more detail with reference to the accompanying drawings. The described embodiments, however, may be embodied in various different forms, and should not be construed as being limited to only the illustrated embodiments herein. Rather, these embodiments are provided as examples so that this disclosure will be thorough and complete, and will fully convey aspects of the present disclosure to those skilled in the art. Accordingly, description of processes, elements, and techniques that are not necessary to those having ordinary skill in the art for a complete understanding of the aspects and features of the present disclosure may be omitted.

Unless otherwise noted, like reference numerals, characters, or combinations thereof denote like elements throughout the attached drawings and the written description, and thus, descriptions thereof will not be repeated. Skilled artisans will appreciate that elements in the figures are illustrated for simplicity and clarity and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

In the detailed description, for the purposes of explanation, numerous specific details are set forth to provide a thorough understanding of various embodiments. It is apparent, however, that various embodiments may be practiced without these specific details or with one or more equivalent arrangements.

It will be understood that, although the terms "zeroth," "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section.

It will be understood that when an element or component is referred to as being "on," "connected to," or "coupled to" another element or component, it can be directly on, connected to, or coupled to the other element or component, or one or more intervening elements or components may be present. However, "directly connected/directly coupled" refers to one component directly connecting or coupling another component without an intermediate component. Meanwhile, other expressions describing relationships between components such as "between," "immediately between" or "adjacent to" and "directly adjacent to" may be construed similarly. In addition, it will also be understood that when an element or component is referred to as being "between" two elements or components, it can be the only element or component between the two elements or components, or one or more intervening elements or components may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, each of the terms "or" and "and/or" includes any and all combinations of one or more of the associated listed items. For example, the expression "A and/or B" denotes A, B, or A and B.

For the purposes of this disclosure, expressions such as "at least one of," when preceding a list of elements, modify the entire list of elements and do not modify the individual elements of the list. For example, "at least one of X, Y, or Z," "at least one of X, Y, and Z," and "at least one selected from the group consisting of X, Y, and Z" may be construed as X only, Y only, Z only, or any combination of two or more of X, Y, and Z, such as, for instance, XYZ, XYY, YZ, and ZZ.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

When one or more embodiments may be implemented differently, a specific process order may be performed differently from the described order. For example, two consecutively described processes may be performed substantially at the same time or performed in an order opposite to the described order.

Any of the components or any combination of the components described (e.g., in any system diagrams included herein) may be used to perform one or more of the operations of any flow chart included herein. Further, (i) the operations are merely examples, and may involve various additional operations not explicitly covered, and (ii) the temporal order of the operations may be varied.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, and/or the like. Also, a person of skill in the art should recognize that the functionality of various computing devices may be combined or integrated into a single computing device, or the functionality of a particular computing device may be distributed across one or more other computing devices.

Any of the functionalities described herein, including any of the functionalities that may be implemented with a host, a device, and/or the like or a combination thereof, may be implemented with hardware, software, firmware, or any combination thereof including, for example, hardware and/or software combinational logic, sequential logic, timers, counters, registers, state machines, volatile memories such as dynamic RAM (DRAM) and/or static RAM (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application-specific ICs (ASICs), central processing units (CPUs) including complex instruction set computer (CISC) processors and/or reduced instruction set computer (RISC) processors, graphics processing units (GPUs), neural processing units (NPUs), tensor processing units (TPUs), data processing units (DPUs), and/or the like, executing instructions stored in any type of memory. In some embodiments, one or more components may be implemented as a system-on-a- chip (SoC).

Any of the computational devices disclosed herein may be implemented in any form factor, such as 3.5 inch, 2.5 inch, 1.8 inch, M.2, Enterprise and Data Center Standard Form Factor (EDSFF), NF1, and/or the like, using any connector configuration such as Serial Advanced Technology Attachment (SATA), Small Computer System Interface (SCSI), Serial Attached SCSI (SAS), U.2, and/or the like. Any of the computational devices disclosed herein may be implemented entirely or partially with, and/or used in connection with, a server chassis, server rack, data room, data center, edge data center, mobile edge data center, and/or any combinations thereof.

Any of the devices disclosed herein that may be implemented as storage devices may be implemented with any type of nonvolatile storage media based on solid-state media, magnetic media, optical media, and/or the like. For example, in some embodiments, a storage device (e.g., a computational storage device) may be implemented as an SSD based on not-AND (NAND) flash memory, persistent memory such as cross-gridded nonvolatile memory, memory with bulk resistance change, PCM, and/or the like, or any combination thereof.

Any of the communication connections and/or communication interfaces disclosed herein may be implemented with one or more interconnects, one or more networks, a network of networks (e.g., the Internet), and/or the like, or a combination thereof, using any type of interface and/or protocol. Examples include Peripheral Component Interconnect Express (PCIe), non-volatile memory express (NVMe), NVMe-over-fabric (NVMe-oF), Ethernet, Transmission Control Protocol/Internet Protocol (TCP/IP), Direct Memory Access (DMA) Remote DMA (RDMA), RDMA over Converged Ethernet (ROCE), FibreChannel, InfiniBand, SATA, SCSI, SAS, Internet Wide Area RDMA Protocol (iWARP), and/or a coherent protocol, such as Compute Express Link (CXL), CXL.mem, CXL.cache, CXL.IO and/or the like, Gen-Z, Open Coherent Accelerator Processor Interface (OpenCAPI), Cache Coherent Interconnect for Accelerators (CCIX), and/or the like, Advanced eXtensible Interface (AXI), any generation of wireless network including 2G, 3G, 4G, 5G, 6G, and/or the like, any generation of Wi-Fi, Bluetooth, near-field communication (NFC), and/or the like, or any combination thereof.

In some embodiments, a software stack may include a communication layer that may implement one or more communication interfaces, protocols, and/or the like such as PCIe, NVMe, CXL, Ethernet, NVMe-oF, TCP/IP, and/or the like, to enable a host and/or an application running on the host to communicate with a computational device or a storage device.

Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As discussed above, the field of AI may experience advancements in machine-learning models (e.g., language models). For example, LLMs have been developed for a variety of natural language processing tasks, resulting in the development of related AI-based services. However, extensive model sizes and heavy computational costs of LLMs may pose significant challenges for model training and inference, particularly in resource-constrained environments. Systems and methods may be suitable for reducing model size and/or complexity to suit the computational operations of a variety of hardware platforms (e.g., conventional hardware platforms) and for dynamically adjusting the structure of LLMs to different downstream tasks.

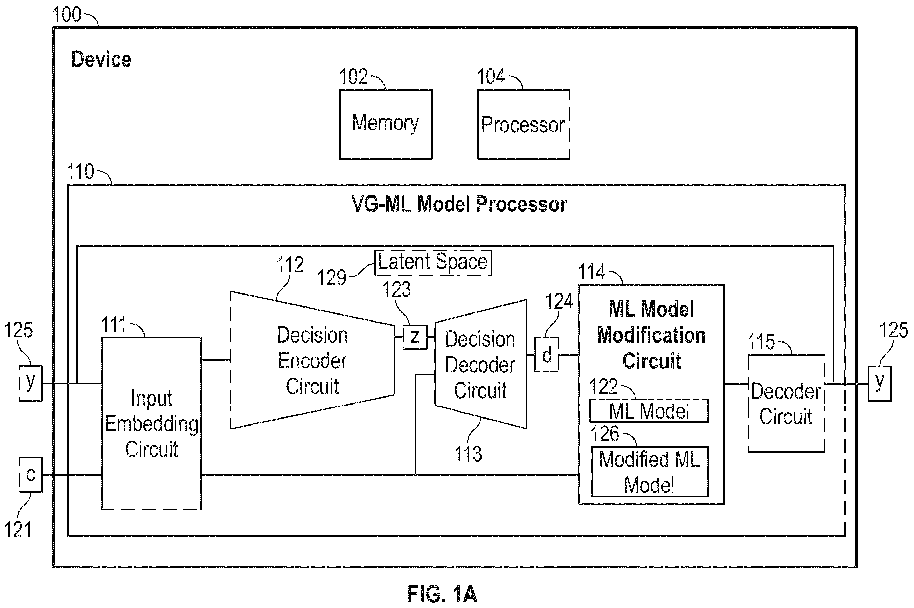

FIG. 1A is a block diagram depicting a computer device 100 for dynamically modifying a machine learning model 122 that is conditioned on an intermediate decision parameter d 124, according to some embodiments of the present disclosure.

As used herein "embedding variational generative dynamics to a machine-learning model" refers to dynamically (e.g., iteratively) updating, modifying, and/or adapting a given machine learning model for improved performance or for performing a new task.

As illustrated in FIG. 1A, the computer device 100 (e.g., one or more computers and/or one or more computer systems) may include a memory 102 (e.g., a memory and/or a storage), a processor 104, and a VG-ML model processor 110 configured for implementing variational generative functions for efficient and flexible processing of machine learning models. As a general description, the VG-ML model processor 110 may be configured to execute one or more functions related to variational generative aspects of machine learning modeling, as disclosed herein, which may involve determining an intermediate decision parameter d 124 that introduces variation into the relationship modeled between a latent variable z 123 and an output y 125 based on a defined input c 121 representing a condition.

According to some embodiments, machine learning models generated, trained, and/or utilized by the VG-ML model processor 110 may be dynamically modified to be robust, flexible, and/or able to conditionally generate diverse outputs. Dynamic modification of a machine learning model may involve changing the structure, parameters, or behavior of the model on-the-fly during training or runtime (e.g., inference) such that the model does not need to be retrained from scratch. Also, dynamically modifying a machine learning model may allow the model to adapt to new data, environments, or requirements substantially in real-time (or pseudo real-time) while it is in use. As an example, dynamic modification of a machine learning model occurring at different instances and/or time periods during a training phase may generate a distinctly different structure for the model at each iteration, instance, or time period. In reference to FIG. 1A, the VG-ML model processor 110 may dynamically modify the machine learning model 122 in a first iteration that results in a first modified machine learning model 126, and then later may dynamically modify the machine learning model 122 in a second iteration such that a second modified machine learning model 126 is generated having a structure that is different from the first modified machine learning model 126.

For example, the machine learning model 122 may be dynamically modified with respect to the given output y 125 and the given input c 121 for a respective iteration. The output y 125 and the input c 121 may be different for each iteration, which may result in having a distinctly dynamically optimized and/or modified machine learning model 126. In FIG. 1A, the VG-ML model processor 110 may include processing circuitry that is configured to implement variational generative functions, including: an input embedding circuit 111; a decision encoder circuit 112; a decision decoder circuit 113; and an ML model modification circuit 114. According to some embodiments, the machine learning models that are generated, trained, and/or utilized by the VG-ML model processor 110 are generative AI models. For example, some generative AI models may be suitable for AI applications where complex and high-dimensional data can be generated with diversity and specificity. In the case of large language models, the models may generate complex and high-dimensional data for various applications that may include natural language applications, image generation applications, multi-modal applications, and one or more other AI-based applications.

The computer device 100 may include a computer system that is capable of AI-related functions including model training, computations, inference, and various AI-based applications. For example, the computer device 100 may be implemented as, for example, and without limitation, a desktop PC, a laptop, a smartphone, a tablet PC, a server, and/or the like. The computer device 100 may also refer to a system in which a cloud computing environment is established. However, the example embodiments are not limited thereto. The computer device 100 may be implemented as any system, device, or apparatus which is capable of AI-based and/or ML-based applications and functions, as described herein. In some embodiments, the computer device 100 may implement a database search engine that supports AI-based capabilities, such as using AI to understand and generate human-like text based on large amounts of text data that may be stored and searchable within the database. For instance, a user may input text into the computer device 100 that represents natural language that a human user may speak in conversation, such as words, sentences, phrases, and/or the like. Subsequently, the computer device 100 may utilize a machine learning model 122 (e.g., large language model) trained and optimized by the VG-ML model processor 110 to return (e.g., to predictively return) recommended word(s), phrase(s), or sentence(s) from the database that are deemed most appropriate in order to generate text provided by the search engine to the user in a coherent format that resembles human conversation (e.g., based on the sequentially input words of the user).

In some embodiments, the processor 104 may be configured to further utilize one or more machine learning models. For example, the processor 104 may be configured to utilize a machine learning model 122, a modified machine learning model 126, large language models, deep learning models, neural networks, large-scale generative AI models, and/or the like. In some embodiments, the VG-ML model processor 110 may be configured to generate, train, and/or optimize the machine learning model 122, the modified machine learning model 126, large language models, deep learning models, neural networks, large-scale generative AI models, and/or the like. The VG-ML model processor 110 may be configured to generate, train, and/or optimize the models in order to implement functions supporting the AI-based and/or ML-based capabilities of the computer device 100. For example, the machine learning model 122 may be trained to support several capabilities of the computer device 100 that may include: advanced natural language processing (e.g., chatbot); image generation; multi-modal (e.g., voice, audio, text, video, image, etc.) processing; autonomous systems; and/or the like.

According to some embodiments, the VG-ML model processor 110 is configured to execute (e.g., configured to perform) structured and/or dynamic modification of an machine learning model 122 based on an intermediate decision parameter d 124, leveraging the variational generative functions disclosed herein, which may improve (e.g., achieve optimization of) the machine learning model and its applications. In some embodiments, the VG-ML model processor 110 is configured to execute a pruning (e.g., a structured pruning) of a large language model based on the intermediate decision parameter d 124 that may be determined in accordance with the variational generative aspects disclosed herein. The VG-ML model processor 110 may generate one or more structured pruning tasks, involving a token-wise adaptive pruning rule. The token-wise adaptive pruning rule may enhance context awareness of a pruned large language model by dynamically adjusting the model structure (e.g., selectively removing less important parameters from the neural network of the model) to maximize computational efficiency (e.g., reducing computational overhead), minimize model size, and/or provide overall improvement (e.g., optimization) of the large language model without significantly sacrificing performance. In some embodiments, the disclosed VG-ML model processor 110 may be configured to execute (e.g., to perform) any suitable structured and/or dynamic modifications to the machine learning model 122 to generate a modified machine learning model 126. In some embodiments, the VG-ML model processor 110 may be configured to execute one or more structured and/or dynamic modifications in lieu of or in addition to structured pruning. The structured and/or dynamic modifications may be based on the variational generative aspects disclosed herein. For example, an output y 125 of the modified machine learning model 126 may be based on a conditional independence and an additional layer of variation introduced by the intermediate decision parameter d 124. The structured and/or dynamic modifications may provide enhancements (e.g., optimizations) related to ML models, including but not limited to: efficient processing; efficient computational efficiency; reduced latency; reduced power consumption; enhanced flexibility and interpretability; improved accuracy and/or generative quality (e.g., by explicitly modeling intermediate factors that influence the data generation process); and/or the like. In some embodiments, the VG-ML model processor 110 may be configured to execute structured and/or dynamic modification of the machine learning model 122, including but not limited to: pruning (e.g., unstructured pruning); multi-modal output selection (e.g., output modality may be decided based on conditions and intermediate factors); mixture of experts (e.g., selecting one or more experts to contribute to the ML model output); and/or the like.

The VG-ML model processor 110 may include various processing circuitry (e.g., may include one or more processors) and may be configured to implement operations related to generating, training, and/or utilizing ML models (e.g., utilizing large-scale generative AI models). The VG-ML model processor 110 may be implemented as a stand-alone processor, one or more microprocessors, a controller, a CPU, or processing device utilizing any suitable hardware, firmware (e.g. an application-specific integrated circuit), software, or a combination of software, firmware, and hardware. The VG-ML model processor 110 may be configured to implement various variational generative functions, as described herein, that are related to generating, training, and/or utilizing an ML model.

Variational generative functions executed by the VG-ML model processor 110 may involve modelling complex data distributions in various domains, thereby leveraging the ability to conditionally generate diverse outputs. In the realm of AI, one limitation (e.g., one challenge), which may be experienced in processing machine learning models, is a direct dependency that is developed between a latent variable z and an output y of the model based on a given input c. This direct dependency (e.g., between the latent variable z and the output y) can constrain the applicability of the machine learning model in AI-based applications that may require generating diverse outputs. The limitation may arise because the condition indicated by the input c may already be fixed as an input, limiting flexibility to introduce additional intermediate factors that could more effectively control the generation of the output y.

To address this and other issues, the disclosed VG-ML model processor 110 may be distinctly configured to determine an intermediate decision parameter d 124, which introduces mediating factors into its generative process. The mediating factors may be based on the latent variable z 123 and the input c 121 through variational inference by modeling a probabilistic sampling of the latent space 129 using the latent variable z 123 (also referred to as "p(d|z, c)"). As used herein, a "generative process" refers to generating, by a machine-learning model, a statistically probable output based on one or more inputs to the machine-learning model. The variational generative aspects implemented by the VG-ML model processor 110 may provide (e.g., may enforce) conditional independence between the latent variable z 123 and the output y 125 given the intermediate decision parameter d 124 and an input c 121.

The VG-ML model processor 110 may be configured to determine an intermediate event, which is represented by the intermediate decision parameter d 124. In some embodiments, the VG-ML model processor 110 may be training a large language model and the intermediate decision parameter d 124 may represent intermediate events and/or conditions that may be significant to the accuracy and/or robustness of the model's generative process. For example, with respect to a large language model, intermediate decision parameter d 124 may represent intermediary factors (e.g., intermediate factors) that may be relevant to a language-based generative process, such as a sentence structure, style in language modeling, or a specific model configuration for pruning. Subsequently, determining the intermediate decision parameter d 124 may allow the machine learning model to generate its final output y 125 in a manner that is influenced by (e.g., indirectly influenced by) the latent variable z 123 and the defined intermediary conditions by modeling the predictive inference between the output y 125 and the input c 121 based on the intermediate decision parameter d 124(also referred to as "p(yld, c)") (e.g., indirect dependency on the intermediate decision parameter d 125 as opposed to being directly dependent on the latent variable z 123 by modeling p(y|z, c)).

The VG-ML model processor 110 may be configured to execute one or more dynamic and/or structured modifications tasks to the machine learning model 122 that result in a flexible generative process executed by the modified machine learning model 126 that is broadly applicable across a wide range of AI-based applications, where complex and high-dimensional data may be generated. The VG-ML model processor 110 may be configured to leverage the variational generative aspects to define and/or execute various dynamic and/or structured modification tasks, including conditional image generation, language model pruning, modeling with a mixture of experts, and/or the like. As used herein, a "structured modification task" refers to a task performed (e.g., by a processor) in accordance with defined rules and/or strategies to change a structure (e.g., to change a parameter, a type, a format, and/or the like)of a machine learning model.

Still referring to FIG. 1A, the input embedding circuit 111 is illustrated as receiving input c 121 and an output y 125. For example, during training the output y 125 may be provided as an input to the input embedding circuit 111. The input c 121 may be data that is deemed appropriate for input that is fed into (e.g., provided to) a machine learning model 122 that is being generated, trained, and/or optimized by the VG-ML model processor 110 (e.g., character, text, image, video, audio, and/or the like). The output y 125 may be a prediction or decision made by the modified machine learning model 126 based on an instance (e.g., a current or previous instance) of the input c 121. In some embodiments, the input c 121 may be an input token of a large language model. The input token may be a basic unit of text that the model processes as input. Accordingly, the input c 121 as an input token may be a word, character, subword, one or more phrases, and/or one or more sentences, that is fed into the machine learning model 122 (e.g., a large language model) as part of a prompt. In some embodiments, the output y 125 may be an output token of a large language model. The output token may be a unit of information produced by the large language model after it processes the input c 121. Accordingly, the output y 125 as an output token can be a single character, one or more words, one or more subwords, one or more phrases, and/or one or more sentences output from the modified machine learning model 126 (e.g., the large language model). In some embodiments, the input embedding circuit 111 is configured to execute a process that transforms the input c 121 and an output y 125 (e.g., feedback from the output y 125), which may be received as raw text, into a format that the machine learning model 122 can understand and utilize. Functions performed by the input embedding circuit 111 may involve tokenization, embedding, and/or positional encoding. In some embodiments, the input embedding circuit 111 may receive the input c 121 and the output y 125 iteratively as a function of a training process, for the machine learning model 122, being executed by the VG-ML model processor 110. In some embodiments, the input embedding circuit 111 may be included (e.g., optionally included) in the configuration of the VG-ML model processor 110. For example, in some embodiments, the input embedding circuit 111 may be included during (e.g., may be suitable for) processing of large language models.

Characteristics associated with the input c 121 may define a condition that is observed by the machine learning model 122 to learn, over time, inferred relationships and ultimately generate the output y 125 that corresponds to the given input c 121. In other words, the output y 125 may be conditionally generated by the modified machine learning model 126 based on the input c 121, which indicates a particular context and/or condition associated with the inference. In such embodiments, input c 121 may be also referred to as a condition.

Still referring to FIG. 1A, in some embodiments, the decision encoder circuit 112 may receive the input c 121 and the output y 125, formatted by the input embedding circuit 111. For example, during a training (or re-training) phase of the machine learning model 122 the input embedding circuit 111 may execute (e.g., may perform) a mapping of the output y 125 corresponding to a given input c 121 to a latent space 129, which may be represented as a data distribution (e.g., a Gaussian distribution, and/or the like). During the training (or re-training) process, the decision encoder circuit 112 may be configured to embed (e.g., to provide or to record) one or more instances of the input c 121 and the output y 125 into the data distribution, iteratively, which may generate a latent space, and the locations of these points in the latent space (e.g., a continuous vector space) may be meaningful to machine learning algorithms. As used herein, "embedding" refers to process of mapping a set of data points into a lower-dimensional space where similar data points are closer together to model and/or infer patterns. The decision encoder circuit 112 may learn to embed relationships between the input c 121 and the corresponding output y 125. For example, the embedded relationships may be defined by a standard deviation and by iteratively performing the embedding for input c 121 and the output y 125 through the training process of the machine learning model 122 (e.g., iteratively performing the embedding for a complete training data set) to build various contextual and/or conditional relationships as the latent space 129. The decision encoder circuit 112 may be configured to model a dependency between the latent variable z 123 and a data point in the latent space 129 corresponding to the output y 125 given a condition associated with the input c 121. The encoding implemented by the decision encoder circuit 112 to generate the latent space 129 may be represented mathematically as:

$$q(z|y, c) \qquad\qquad (eq. 1)$$

Where q refers to an approximate posterior distribution modeled as a normal distribution, z refers to the latent variable 123, y refers to the output y 125, $q(z|y, c)$ refers to the conditional relationship, and c refers to the input 121 used as a condition.

In some embodiments, the decision decoder circuit 113 may be configured to perform sampling of the latent space 129 (output from the decision encoder circuit 112) utilizing the latent variable z 123 and, based on this sampling, the decision decoder circuit 113 may: determine an intermediate decision parameter d 124; and generate the structured and/or dynamic modification task for the machine learning model 122 that is conditioned on the input c 121 and the intermediate decision parameter d 124. The decision decoder circuit 113 may be configured to (e.g., may have the distinct capability to) introduce an intermediate event, via the intermediate decision parameter d 124, which mediates (e.g., modifies) an otherwise direct dependency between the latent variable z 123 and the output y 125. The decision decoder circuit 113 may implement variational generative aspects involving conditional independence and factorizing a generative process into two components, which may be generally described as determining the intermediate decision parameter d 124, and generating the structured and/or dynamic modification task for the machine learning model 122 based on the intermediate decision parameter d 124. The decision decoder circuit 113 may execute applying a probabilistic sampling of the defined latent space 129 (generated by the decision encoder circuit 112) using the latent variable z 123 based on the input c 121 (which represents a defined condition) and determining an intermediate decision parameter d 124. The decoding process that is implemented by the decision decoder circuit 113 may be represented mathematically as:

$$p(d|z, c) \qquad\qquad (eq. 2)$$

Where p refers to the conditional likelihood, d refers to the intermediate decision parameter d 124, z refers to the latent variable 123, $d|z, c$ refers to the conditional relationship, and c refers to the input 121 used as a condition.

Subsequently, the decision decoder circuit 113 may execute determining a structured and/or dynamic modification task that is based on the intermediate decision parameter d 124, which models the intermediate factors that influence the data generation process using the structured and/or dynamic modification task. The formulation performed by the decision decoder circuit 113 may be later used to infer an indirect relationship between the latent variable z 123 and the output y 125, with an additional layer of flexibility. For example, the latent variable z 123 may influence the intermediate decision parameter d 124 (determined by the decision decoder circuit 113) based on the given input c 121; and then the output y 125 (determined by the ML model modification circuit 114) may be generated by the modified machine learning model 126 in a manner that is conditioned on the intermediate decision parameter d 124 and the input c 121.

According to the embodiments, the variational generative aspects implemented by the decision decoder circuit 113 may introduce mediating factors, represented by calculating the intermediate decision parameter d 124, that is based on the latent variable z 123 and the input c 121, through variational inference by modeling the relationships from sampling the latent space 129 utilizing the latent variable z 123 (e.g., "$p(d|z, c)$"). By implementing a conditional independence between the latent variable z 123 and the output y 125 given the intermediate decision parameter d 124 (and the input c 121), the decision decoder circuit 113 enables the modified machine learning model 126 to ultimately generate the final output y 125, which is also conditioned on intermediary events and/or factors. The functions of the decision decoder circuit 113, as disclosed herein, may determine the intermediate decision parameter d 124, which may realize (e.g., which may provide) a structured and flexible generative process that may be executed by the modified machine learning model 126. For example, the VG-ML model processor 110 may generate, train, and/or improve (e.g., optimize) the generative process performed by the modified machine learning model 126, and thus the generative process may be more robust and flexible to be broadly applicable across a wide range of AI-based applications.

In some embodiments, the decision decoder circuit 113 may implement variational generative aspects that generate a structured and flexible generative process particularly for large language models. Thus, in some embodiments, the decision decoder circuit 113 may predict an intermediate event and/or decision that may be a relevant factor with respect to training a large language model. By determining the intermediate decision parameter d 124, a desired tuning of the large language model may be generated to adjust the inferred relationships and predictions in a manner that is related to language. As an example, the decision decoder circuit 113 may be configured to determine an intermediate decision parameter d 124 that represents an intermediary condition that may impact natural language processing, such as a particular sentence structure, a style in language modeling, and/or a specific model configuration given (e.g., based on) the latent variable z 123 and input c 121. The decision decoder circuit 113, in some embodiments, may be configured to generate a structured pruning task for the large language model as a particular type of structured and/or dynamic modification task. The structured pruning task defined by the decision decoder circuit 113 may be a pruning strategy that determines an adapted and/or reduced (e.g., minimized) configuration of the large language model by defining a controlled selection of parameters, heads, weights, and/or the like to remove from the configuration of the model's neural network. In accordance with the variational generative aspects implemented by the decision decoder circuit 113, the structured pruning task may be a token-wise adaptive pruning strategy and/or a rule, which enhances a context awareness of the pruned large language model by: dynamically adjusting the model's structure; adapting to individual tokens by sampling from the learned latent distribution; and being improved (e.g., optimized) in design for transformer-based autoregressive large language models.

In some embodiments, the ML model modification circuit 114 may be configured to dynamically modify the configuration (e.g., change the structure) of the machine learning model 122 by applying the structured and/or dynamic modification task (determined by the decision decoder circuit 113) and as a result, generate the modified machine learning model 126. As a result of the functions executed by the ML model modification circuit 114, the modified machine learning model 126 may have a configuration that has been dynamically adjusted and/or changed in a manner that has a layer of flexibility involving one or more additional intermediate factors represented by the intermediate decision parameter d 124 (and further conditioned on the input c 121) that could more effectively control the generation of the output y 125. Thus, the machine learning model 122 may be modified by the ML model modification circuit 114 to generate the modified machine learning model 126 to generate an output y 125 that is conditioned on intermediary events and/or factors, represented by the intermediate decision parameter d 124. In other words, the ML model modification circuit 114 may be configured to generate the modified machine learning model 126 to be adapted to infer an indirect relationship between the latent variable z 123 and the output y 125 (as opposed to a direct relationship). The ML model modification circuit 114 may be configured to generate the modified machine learning model 126 in a manner that allows the intermediate decision parameter d 124 to shape the final output y 125 indirectly influenced by the latent variable z 123. The modification process that is implemented by the ML model modification circuit 114 may be represented mathematically as:

$$p(y|d, c) \qquad\qquad (eq.\ 3)$$

Where p refers to the conditional likelihood, y refers to the output y 125, d refers to the intermediate decision parameter d 124, y|d,c refers to the conditional relationship, and c refers to the input c 121 used as a condition.

In some embodiments, the ML model modification circuit 114 may be configured to dynamically prune a large language model by removing at least one of weights, parameters, neurons, and/or heads from the configuration of the model (e.g., a model that includes a neural network) in accordance with the structured pruning task (determined by decision decoder circuit 113). In some embodiments, a dynamically pruned machine learning model, which may be configured to implement the indirect relationship to the output y 125 based on the intermediate decision parameter d 124, and thus may predict the output y 125 specifically for the input c 121 using fewer parameters while maintaining context awareness and flexibility. Thus, according to some embodiments, the ML model modification circuit 114 may execute functions that leverage a probabilistic sampling process to maintain (or enhance) overall context awareness, even with an optimized and/or minimized (e.g., fewer parameters) large language model, by utilizing structured pruning, as disclosed herein.

In some embodiments, the functions of the decision decoder circuit 113 and/or the ML model modification circuit 114 may be performed during the training phases and/or the inference phases of the ML model utilized by the computer device 100. According to some embodiments, inference utilizing the machine learning model functions of the decision decoder circuit 113 and/or the ML model modification circuit 114 may be executed by another stand-alone computer device or processor.

In accordance with the embodiments disclosed herein, the VG-ML model processor 110, including the described circuity, may leverage various variational generative aspects to achieve functions, including but not limited to: adaptively capturing characteristics of input tokens to enhance an overall context awareness of the machine learning model, even with fewer parameters from pruning; leveraging a probabilistic sampling process drawn from a learned latent distribution; and achieving a structured pruning (conditioned on the intermediate decision parameter d 124) that may maximize computational efficiency and minimizing the size and/or complexity of the model.

The memory 102 may store data and/or machine learning models associated with AI-based applications. In some embodiments, the memory 102 may store models generated, trained, and/or modified by the VG-ML model processor 110 to implement complex ML tasks including advanced natural language processing (e.g., chatbot), image generation, multi-modal (e.g., voice, audio, text, video, image, and/or the like) processing, autonomous systems, and/or the like. For example, multi-modal processing may include generating a video based on input text. In some embodiments, , the memory 102 may be configured to store the machine learning model 122, the modified machine learning model 126, large language models, deep learning models, neural networks, large-scale generative AI models, and/or the like.. Examples of data stored in memory 102 may include training data sets, data related to variational generative aspects implemented by the VG-ML model processor 110 (e.g., data distributions, mean, variance, embeddings, and/or the like), data related to particular AI-based applications implemented by the computer device 100 (e.g., data used for natural language processing application, such as chatbot, database searches, and/or the like), and/or the like. In some embodiments, the memory 102 may store basic data including a plurality of sentences. The basic data may be the data required to generate a language model. In other words, the language model may be generated by training with respect to the basic data. In some embodiments, the memory 102 may also store a language model pruned by the VG-ML model processor 110, as discussed above.

The processor 104 may include various processing circuitry and may control overall operations of the computer device 100, including AI-based and/or ML-based applications supported by the ML models generated, trained, and modified by the VG-ML model processor 110, as disclosed herein. In some embodiments, the processor 104 may be implemented, for example, and without limitation, as a digital signal processor (DSP), a microprocessor, or a time controller (TCON), or the like, but is not limited thereto. The processor may, for example, and without limitation, be one or more of a dedicated processor, a central processing unit (CPU), a micro controller unit (MCU), a micro processing unit (MPU), a controller, an application processor (AP), a communication processor (CP), an ARM processor, or the like, or may be defined as one of the terms above. Also, the processor 104 may be implemented as a system on chip (SoC) in which a processing algorithm is provided, or may be implemented in a form of a field programmable gate array (FPGA), or the like, but is not limited thereto.

In some embodiments, the decoder circuit 115 may be configured to convert an encoded representation of data, signaling the output y 125 generated by the ML model modification circuit 114, into a desired output format for outputting from the VG-ML model processor 110. In some embodiments, the VG-ML model processor 110 may be configured to perform generation, training, and/or modification of a large language model (e.g., a LLM supporting an AI-based natural language processing application). Accordingly, in the context of large language models, the decoder circuit 115 may be configured to generate the output y 125 as a sequence of words or output tokens based on the input c 121 provided to the model. At multiple iterations or time steps, the large language model implemented by the VG-ML model processor 110 may use a previous token or word to generate an output y 125 which is a prediction of the next most probable token in the vocabulary. For example, as depicted in FIG. 1A, the output y 125 may also be fed back into the VG-ML model processor 110 to be received as input (to the input embedding circuit 111) in an iterative process. As previously described, the output y 125 from the decoder circuit 115 may be presented to the user, via the computer device 100, in a format that includes character(s), word(s), phrase(s), or sentence(s) that are deemed (e.g., selected as being) most appropriate in order to generate text provided by the application to the user in a coherent format that resembles human conversation (e.g., based on the sequentially input words of the user). In some embodiments, the decoder circuit 115 may be configured to implement multiple layers, including a self-attention layer, a cross-attention layer, and a feed-forward neural network.

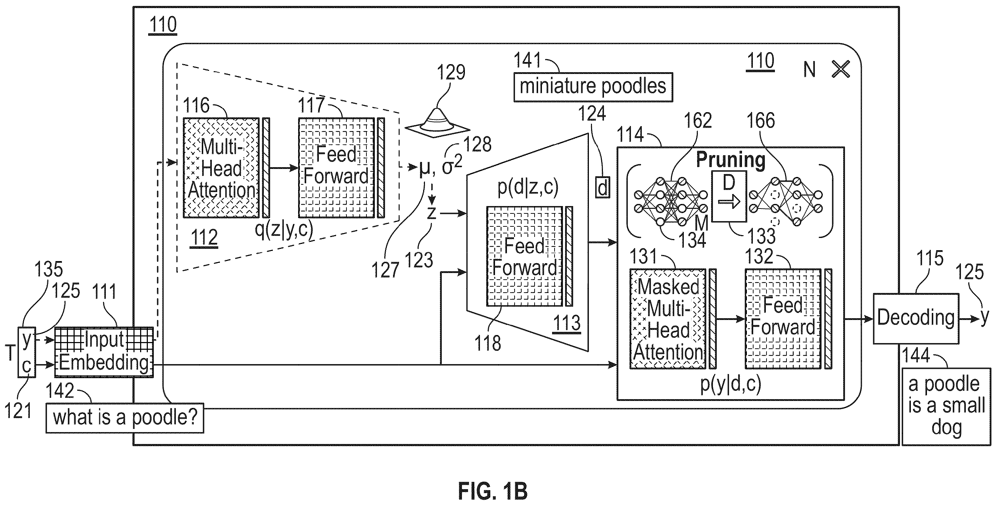

Still referring to FIG. 1A, an example configuration of the VG-ML model processor 110 is illustrated. The configuration shown in FIG. 1A may be suitably modified, for example, based on the intended AI application, without departing from the scope of the present disclosure. In some embodiments, elements of the VG-ML model processor 110 may be optionally included and/or removed, for instance the input embedding circuit 111 and the decoder circuit 115 may be excluded from the circuitry of the VG-ML model processor 110 for applications not involving large language model processing. As previously described, the VG-ML model processor 110 may be structured (e.g., particularly structured) to generate, train, and/or modify large language models (e.g., transformer-based autoregressive models)and implement structured pruning tasks for the large language models (shown in FIG. 1B and further described in greater detail below).

FIG. 1B is a block diagram depicting a VG-ML model processor 110 in the computer device of FIG. 1A in an example configuration for dynamically modifying a large language model 162 that is conditioned on an intermediate decision parameter d 124, according to some embodiments of the present disclosure.

Referring now to FIG. 1B, a configuration for the VG-ML model processor 110 may be structured (e.g., may be particularly structured) to generate, train, and/or modify large language models, for instance to support AI-based language processing applications (e.g., chatbot, database search engine, and/or the like). As depicted in FIG. 1B, in some embodiments, the dashed shapes and/or dashed arrows may only be visible (e.g., may only be provided) at training time (e.g., training phase). In some embodiments, the decision decoder circuit 113 (as depicted in FIG. 1B) may implement dynamic structured pruning tasks. The dynamic structured pruning tasks may implement a dynamic and context-aware pruning strategy for a large language model that is adapted to individual tokens by sampling from a learned latent distribution, in accordance with the variational generative aspects disclosed herein. As a general description, the circuitry of the VG-ML model processor 110 shown in FIG. 1B has a substantially similar structure and function as described above in reference to FIG. 1A. However, FIG. 1B depicts the VG-ML model processor having circuity relating to its transformer functionality, which may include: multi-head attention circuity 116 and 131 (e.g., masked multi-head attention circuitry) that may be configured to execute multiple attention mechanisms in parallel to process information from an input sequence and then concatenated and/or linearly transform the dependent attention outputs into an expected dimension; and feed forward circuity 117, 118, and 132 which may be configured to pass information in a direction (e.g., to sub-units within each encoder, decoder, and machine learning layer).

As discussed above, the field of AI and ML has experienced recent technological advancements related to language models. Specifically, large language models have set new benchmarks across a variety of natural language processing applications. However, extensive model sizes and heavy computational costs associated with such large-scale machine learning models can pose significant challenges for model inference particularly in resource-constrained environments. To mitigate the aforementioned and other drawbacks, the VG-ML model processor 110 may be configured to implement distinct structured pruning tasks based on the determined intermediate decision parameter d 124, as a solution to reduce the size and/or complexity of such large-scale language models, which may align with the computational operations of conventional hardware platforms. As disclosed herein, the VG-ML model processor 110 in FIG. 1B may implement various variational generative aspects that may improve (e.g., optimize) computational efficiency and reduce (e.g., minimize) model size related to generating, training, and/or utilizing large language models. For example, the large language model 162 depicted in FIG. 1B may be a type of machine learning model 122 that is in FIG. 1A, and the pruned large language model 166 in FIG. 1B may be a type of modified machine learning model 126 in FIG. 1A.

According to some embodiments of the present disclosure, the decision decoder circuit 113 is configured to determine a token-wise structured pruning task that is conditioned upon a latent variable z 123 and an intermediate event, which may be represented by the intermediate decision parameter d 124 (e.g., indirect relationship between the output y 125 and the latent variable z 123), in a manner that enhances context awareness of a large language model 162 by dynamically adjusting the configuration of the large language model 162 (e.g., pruning heads from the neural network), for example, during training and/or inference phases relating to the large scale model to generated the pruned large language model 166. In some embodiments, the structured pruning tasks that are implemented by the decision decoder circuit 113 are executed in addition to one or more existing pruning strategies applied to the large language model 162 as an enhancement in order to improve computational complexity. The decision decoder circuit 113 may leverage various variational generative aspects to enable the large language model 162 to more effectively adjust to domain-specific contexts, and may improve (e.g., optimize) the model pruning toward preserving or even enhancing its performance while reducing the complexity of the model. The functions of the decision decoder circuit 113, including structured pruning of the large language model 162, may enable (e.g., may realize) several advantages such as reducing the complexity of neural networks without compromising their prediction accuracy, and improving the overall performance of the large language models, even after pruning.

In some embodiments, the decision decoder circuit 113 is configured to execute the procedures, calculations, and/or algorithms described below, as functions of implementing variational generative aspects of the disclosure, including determining the intermediate decision parameter d 124, and implementing the structured pruning tasks disclosed here. Given a large language model 162 (e.g., M) with parameters $\theta$ and a dataset T 135(e.g., T = {(c,y)}), a pruning decision network D 133 aims to determine a set of attention heads within the large language model 162 (e.g., M) that should be pruned to improve (e.g., to optimize) model performance on the input c 121 and the corresponding output y 125 of the training data (e.g., on each pair of T). The pruning decision network D 133 may produce a probability distribution over the heads 134 (e.g., attention heads), indicating the likelihood of each head 134 that should be pruned based on the instance of the input c 121. An output of the pruning decision network D 133 for each head 134 given an input c 121 can be represented as $p(h|c; \theta_D)$, where $\theta_D$ denotes the parameters of the pruning decision network D 133. In this way, the structured pruning task can be defined as selecting heads 134 for which $p(h|c; \theta_D)$ are ranked in the top-K highest values, determined by the number of heads 134 (e.g., N) and pruning ratio s as $K = \lfloor N \times s \rfloor$. This decision mechanism ensures that the pruning strategy is dynamically adapted to the input c 121, leveraging the predictive capacity of decision network D 133 to prune the heads 134 while optimizing performance and efficiency by adapting its structure to each data instance of the dataset T 135.

The resulting pruned large language model 166 may be defined by the subset of heads 134 retained after pruning, and thus a optimization for the pruned large language model 166 can be represented mathematically as:

$$maximize \sum_{(c,y) \in T} \log p(y|c; \theta') \qquad (\text{eq. 4})$$
$$subject\ to\ \theta' = \theta \setminus \{\theta_h | h \in S(p(h|c; \theta_D), s)\}$$

where $\theta_h$ denotes the parameters of the head h, and
$\theta'$ denotes the parameters of the pruned model, which is obtained after removing $\theta_h$ from M.

A criterion for the structured pruning task may be set by a selection function S that selects K heads based on the ratio s. The optimization may be calculated to adjust both the parameters $\theta'$ of the pruned model and the parameters $\theta_D$ of the pruning decision network D 133 to maximize the likelihood of the correct output y 125 given the input c 121.

Subsequently, the decision decoder circuit 113 may be configured to calculate the structured pruning tasks by solving eq. 4. In some embodiments, this calculation involves finding the parameters $\theta'$ of the pruned model given input c 121 and its optimization by maximizing the likelihood of output y 125 over the data pairs in the dataset T 135. In some embodiments, the calculation may involve extending Bayes' theorem to include the intermediate decision parameter d 124, which can be utilized to determine one or more tasks that adaptively prune the large language model 162 based on the calculated optimization. Bayes' theorem can be represented mathematically as:

$$p(z|y) = \frac{p(y|Z)p(z)}{p(y)} \qquad \text{(eq. 5)}$$

where p(z|y) refers to the posterior probability of z given y,
p(y|z) refers to the likelihood of y given z, p(z) refers to the prior probability of z, and
p(y) refers to the marginal likelihood of evidence y occurring.

The extension of Bayes' theorem in eq. 5 may be extended and represented mathematically as:

$$p(z|y,c) = \frac{p(y|Z,C)p(z|c)}{p(y|c)} \qquad \text{(eq. 6)}$$

As mentioned above, the decision decoder circuit 113 may be configured to incorporate an additional event, represented by the intermediate decision parameter d 124, which may occur given the latent variable z 123 and condition indicated by the input c 121. Then, the intermediate decision parameter d 124 can mediate the relationship between the latent variable z 123 and the output y 125, conditioned upon the input c 121. In this context, given the latent variable z 123 and the input c 121, the occurrence of the event generating output y 125 may depend on intermediate decision parameter d 124, and once the intermediate decision parameter d 124 is known, the latent variable z 123 may provide no additional information about the output y 125. Under such a conditional independence relationship, the probability p(y|z, c) may be determined using the definition of conditional probability as p(y|d, c) ▪ p(d|z, c) (e.g., the product of the conditional probability of the output y 125 given the intermediate decision parameter d 124 and the input c 121 (condition), and the conditional probability of d 124 given the latent variable z 123 and condition given by the input c 121). Therefore, the eq. 6 may be reformulated and represented mathematically as:

$$p(z|y,c) = \frac{p(y|d,C)p(d|z,c)p(z|c)}{p(y|c)} \qquad \text{(eq. 7)}$$

This relationship defined in eq. 7 holds with the conditional independence between the output y 125 and the latent variable z 123, given the presence of the intermediate decision parameter d 124 and the input c 121.

Still referring to FIG. 1B, how the decision encoder circuit 112 may be configured to implement q(z|y, c) to learn to embed the input c 121 and the output y 125 into a latent space 129 is illustrated; and the decision decoder circuit 113 may be configured to implement p(d|z, c) to generate the structured pruning tasks that are conditioned on the input c 121 using the sampled latent variable z 123. In addition, ML model modification circuit 114 may be configured to implement p(y|d, c) where the dynamically pruned large language model 166 predicts the output y 125 (e.g., output token y) specifically for the input c 121 using fewer parameters than the previous large language model 162 while maintaining context awareness.

Referring still to FIG. 1B, in some embodiments, during training time, the decision encoder circuit 112 takes input (c, y) to generate mean $\mu$ 127 and variance $\sigma^2$ 128 for the latent space 129 (e.g., a latent variable distribution). The mean $\mu$ 127 and variance $\sigma^2$ 128 are then utilized to sample the latent variable z 123 by implementing (e.g., by performing) $z \sim N(\mu, \sigma2)$ (which may be referred to as applying a probabilistic sampling to the data distribution of the latent space 129 utilizing the latent variable z 123..

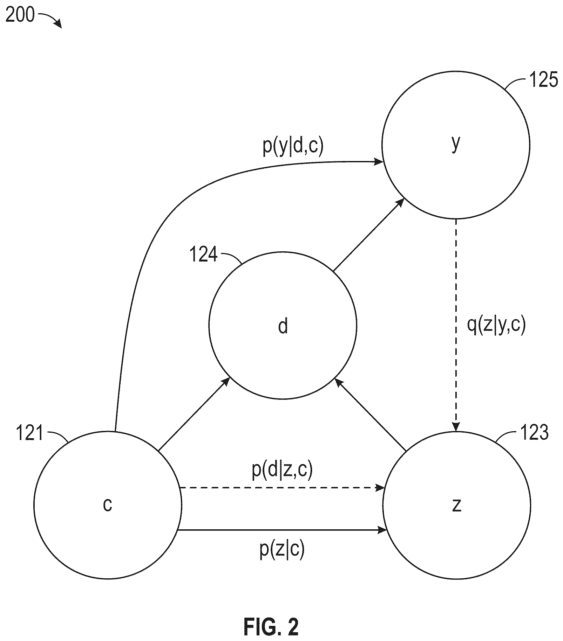

The decision decoder circuit 113 may use sampled latent variable z 123 along with the input c 121 (e.g., input data) to compute pruning probabilities p(h|c, z; $\theta$De), associated with each structural component in the base model M (e.g., large language model 162). Neuron clusters with the K highest probabilities may be selected based on the pruning ratio s to configure temporarily reduced model parameters $\theta' = \theta \setminus \theta p$. The pruned large language model 166 with parameters $\theta'$ may then be used to generate predictions generating the output y 125 of the pruned large language model 166, while taking into account the intermediary (e.g., the intermediate) event, represented by the intermediate decision parameter d 124 under conditional independence. Updated pruned parameters $\theta'$ can then be merged back with the unpruned parameters $\theta_{cp}$ to update the full large language model 162 for the next iteration. This process, implemented by the decision encoder circuit 112 and the decision decoder circuit 113, may repeat iteratively, for example, for each batch across multiple epochs (N), progressively refining the parameters $\theta$. Thus, the VG-ML model processor 110, as disclosed herein, may be configured to determine one or more structured pruning tasks for the large language model 162 that may have some dependency on the latent variable z 123, on the intermediate decision parameter d 124, and on the input c 121 in a manner that introduces an intermediate event (e.g., intermediate decision parameter d) to create an indirect dependency between the latent variable z 123 and the output y 125 which is discussed in further detail below and illustrated in FIG. 2.

In an illustrative example for FIG. 1B, a large language model 162 being processed by the VG-ML model processor 110 may receive input c 121 (or a prompt) shown as input text 142 (e.g., "What is a poodle?") to feed into the large language model 162. As a result of a generative process, the pruned large language model 166 may generate new and/or different types of content that can be produced as output y 125 from the VG-ML model processor 110, which may be presented in a form that is intelligible to the user. For example, the content may include text (e.g., conversational text), an image, a video, and/or the like. In accordance with the variational generative aspects disclosed herein, the decision encoder circuit 112 may capture a contextual meaning of the text of the entered prompt by learning to embed the input c 121 and output y 125 (e.g., output token y) into the latent space 129. The decision decoder circuit 113 may generate a structured pruning task that is conditioned on the input c 121 and the intermediate decision parameter d 124 (determined using the created latent space) using the sampled latent variable z 123.

Accordingly, the ML model modification circuit 114 may dynamically prune a previous instance of the large language model 162 based on the intermediate decision parameter d 124 (e.g., removing multiple parameters from the configuration of the neural network for the model) to change the large language model 162 (e.g., a first machine learning model) into a pruned large language model 166 (e.g., a modified version of the first machine learning model) that is, for example, reduced in size and/or complexity by the structured pruning task and that predicts the output y 125 specifically for the input c 121 while having reduced computational overhead and maintaining context awareness. For example, the intermediate decision parameter d 124 may represent an intermediate factor, such as identifying that there is a larger probability that the predictive output to an input prompt including the token "poodle" should generate an output token that is contextually related to contextual text 141 (e.g., "miniature poodles") (e.g., intermediate decision parameter d). Thereafter, the VG-ML model processor 110 may dynamically prune the large language model 162 with this contextual awareness to adjust the model in a manner that more effectively controls the generation process to be tuned to the intermediate factor (e.g., greater likelihood that the user intended a "miniature poodle" rather than a "royal/giant poodle"). As a result, the pruned large language model 166 may generate the output y 125 as new responsive text 144 (e.g., "a poodle is a small dog...") to be provided to a user. As illustrated in FIG. 1B, the VG-ML model processor 110 may be configured to generate the pruned large language model 166 that predicts the output y 125 (for the input c 121), which has been conditionally adapted to the intermediate decision parameter d 124 in a manner that introduces intermediate factors and creates an indirect dependency between the latent variable z 123 and the output y 125 resulting in a more flexible generative process for the pruned large language model 166.

FIG. 2 is a diagram depicting relationships relating to the intermediate decision implemented by the VG-ML model processor in FIG. 1B, according to some embodiments of the present disclosure.

Referring to FIG. 2, a graph 200 illustrates relationships and/or dependencies between various variables that can be generated by the VG-ML model processor 110 (shown in FIG. 1A), for example, implementing the variational generative aspects in accordance with aspects of some embodiments of the present disclosure. The graph 200 depicts several variables that may be related to processing a machine learning model, including the input c 121 (which may correspond to input c 121 of FIG. 1A), the latent variable 123, the intermediate decision parameter d 124, and the output y 125 as nodes in the graph 200 while the relationships and/or dependencies therebetween are represented by the edges (e.g., lines connecting the nodes). FIG. 2 illustrates that mediating factors, namely the intermediate decision parameter d 124, may be introduced into the process causing a layer of flexibility that exists between the latent variable z 123 and the output y 125. Variational inference may be implemented by modeling $p(d|z, c)$, which creates an indirect relationship between the latent variable z 123 and the output y 125 and between the input c 121 and the output y 125 (e.g., connected through the intermediate decision parameter d 124). In some embodiments, during training of the machine learning model, the process (e.g., the generative process) may learn to embed the input c 121 and output y 125 into a latent space and, use the latent variable 123 to sample this latent space utilizing $q(z|y, c)$, and generate a learned relationship between the latent variable z 123 and the output y 125. This relationship can be subsequently utilized to predict the intermediate decision parameter d 124 given the latent variable z 123. Accordingly, the process may enforce conditional independence between the latent variable z 123 and the output y 125 given the intermediate decision parameter d 124 and the input c 121. Subsequently, the intermediate decision parameter d 124 can be applied to the final output y 125, as graph 200 shows the output y 125 to be indirectly dependent upon the latent variable z 123 and to be conditioned upon the input c 121 and the intermediate decision parameter d 124 by modeling p(y|d, c). Graph 200 illustrates the indirect relationship between the latent variable z 123 and the output y 125 (e.g., connected through the intermediate decision parameter d 124) having an additional layer of flexibility, allowing the latent variable z 123 to influence the intermediate decision parameter d 124 and the output y 125.

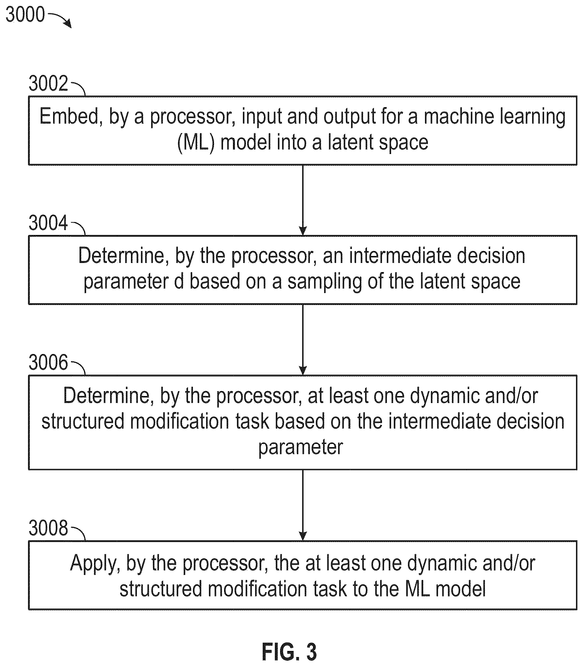

FIG. 3 is a flowchart depicting operations of a method 3000 for dynamically modifying a machine learning model that is conditioned on an intermediate decision parameter, according to some embodiments of the present disclosure.

A processor may embed an input and output for a machine learning model into a latent space (operation 3002). For example, during training of a machine learning model, input data (e.g., an input prompt in the form of text, image, audio, video, code, and/or the like) representing a condition and an output generated by the predictions of the ML model may be embedded into a latent space. By creating relationships between the input and the output of the model within the latent space, a data distribution may be defined. In some embodiments, the relationships between the input condition and the output that are associated with the embeddings in the latent space may be represented as q(z|y, c) and the data distribution may by be defined by the mean $\mu$ and the variance $\sigma^2$. The method 3000 may adaptively capture the characteristics of each input token by generating the embedding, enabling the method 3000 to learn latent representations that generate controlled and diverse outputs by conditioning on specific input variables. Accordingly, the embeddings in the latent space may model the dependency between the latent variable z and the data point y, given a condition associated with the input. In some embodiments, the machine learning model may be a large language model for supporting AI-based language processing applications, the input may be a prompt in text, and the output may be an output token.

In some embodiments, the processor may determine an intermediate decision parameter d based on sampling the latent variable z in the defined latent space (operation 3004). The method 3000 may introduce an intermediate event that ultimately adapts generation of outputs by the machine learning model by determining the intermediate decision parameter d. Consideration of an intermediate event in generating, training, and/or utilizing the ML model may enable the addition of intermediary factors that can be utilized to infer an indirect relationship between the latent variable z and the output y that includes the additional layer of flexibility that the intermediate decision parameter d (e.g., intermediate factors and/or events) provides. For example, the intermediate decision parameter d may be determined based on the latent variable z (e.g., sampling of z in the latent space) and the input c through variational inference. In some embodiments, a probabilistic sampling of the latent space may be performed utilizing the latent variable z by modeling p(d|z, c). The model may then predict the intermediate decision parameter d, given the latent variable z and the input c and may ultimately incorporate intermediate control factors that may play a role (e.g., a critical role) in the generation process.

In some embodiments, the processor may determine at least one dynamic and/or structured modification task based on the intermediate decision parameter d (operation 3006). The method 3000 may apply a dynamic and/or structured modification task to the ML model while the model is being generated, trained, and/or utilized such that the output y from the ML model is generated in a manner that is conditioned on the intermediate decision parameter d, the latent variable z, and the input c. In some embodiments, the method 3000 may be utilized for training a large-scale generative AI model. The intermediate decision parameter d that has been determined (previous operation 3004) may then by utilized to generate a dynamic and/or structure modification task that is applied to the ML model to dynamically modify and/or adapt the generative process of the ML model to predict an output that has some dependency on the intermediate decision parameter d. The dynamic and/or structured modification task can involve one or more rules that govern a strategy for dynamically modifying the configuration and/or generative process of the ML model in a manner that has a structured, organized, and/or mathematically defined relationship with the intermediate decision parameter d. Thus, the method 3000 may enable intermediate factors, represented by the intermediate decision parameter d, to dynamically modify the inferred relationship between the input c and the output y that is predicted by the model, by generating the dynamic and/or structure modification task to influence the generative process and the final predictions inferred by the ML model. As previously described, the method 3000 may be utilized in processing large language models. Accordingly, in some embodiments, the dynamic and/or structured modification task may be a structured pruning task that is dynamically applied to the large language model during the training phase and/or the inference phase of the model. Examples of dynamic and/or structured modification tasks may include, but are not limited to: pruning (e.g., unstructured pruning); multi-modal output selection (e.g., output modality may be decided based on conditions and intermediate factors); mixture of experts (e.g., selecting one or more experts to contribute to the ML model output); and/or the like.

In some embodiments, the processor may apply the dynamic and/or structured modification task to the ML model (operation 3008). The method 3000 may involve dynamically modifying and/or adapting the configuration and/or the generative process of the ML model in accordance with the rules defining the strategy of the dynamic and/or structured modification task. According to the embodiment, applying the dynamic and/or structured modification task to the ML model may be included into the training phase and/or inference phase of the ML model. For example, rules of the dynamic and/or structured modification task may be dynamically integrated into one or more iterations of the training process for the ML model in a manner that adapts the model in using a structured, organized, and/or mathematically defined relationship with the intermediate decision parameter d. In some embodiments, the result of applying the dynamic and/or structured modification task is generating a modified ML model that has a different neural network configuration and/or inference process than a prior ML model (e.g., an ML model trained based on a previous training iteration).

There are some embodiments that may include processing a large language model, in which applying the dynamic and/or structured modification task involves performing a structured pruning task to dynamically prune the large language model. The structured pruning task may reduce, minimize, and/or optimize the size and/or complexity of the large-scale model based on the intermediate decision parameter d while maintaining context awareness. For example, applying the structured pruning task to the large language model may involve removing one or more parameters, heads, weights, and/or the like from the model to dynamically adapt the neural network configuration of the large language model in a manner that is dependent upon the intermediate decision parameter d. By applying the dynamic and/or structured modification task to the ML model, the method 3000 may generate a structured and flexible generative process that may be broadly applicable across a wide range of AI-based and/or ML-based applications that involve processing complex and high-dimensional data, which may be generated with diversity and specificity. Applications may include: natural language processing; image generation; multi-modal generation; automation systems; and/or the like. As such, a modified ML model that is dynamically adapted utilizing the method 3000 may receive inputs (or prompts), such as text, image, audio, video, and code, to generate new and/or different types of content from the input, such as text and chat, images, code, video, and/or embeddings that have been conditionally adapted to the intermediate decision parameter d.

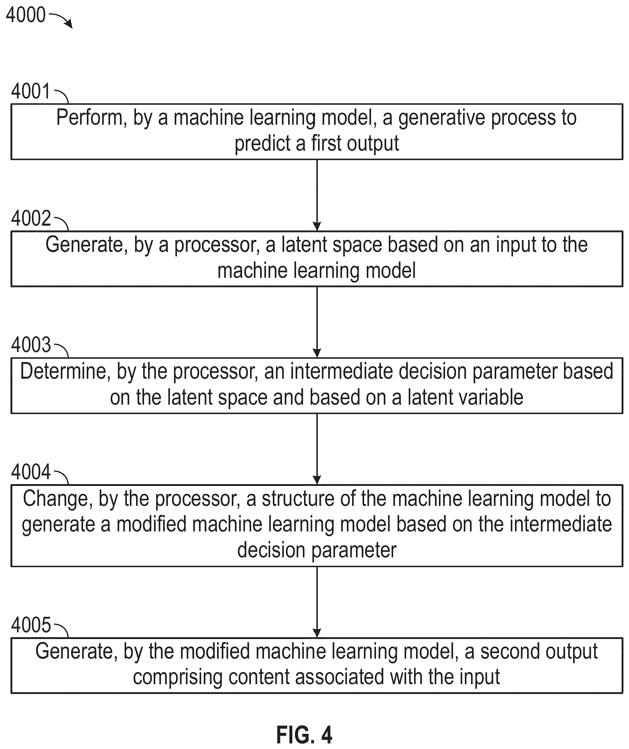

FIG. 4 is a flowchart depicting operations of a method 4000 for modifying a machine-learning model, according to some embodiments of the present disclosure.

Referring to FIG. 4, the method 4000 may include one or more of the following operations. A machine learning model 122 (see FIG. 1A) may perform a generative process to predict (e.g., to estimate) a first output (operation 4001). A processor 104 may generate a latent space 129 based on an input c 121 to the machine learning model 122 (operation 4002). The processor 104 may determine an intermediate decision parameter d 124 based on the latent space 129 and based on a latent variable z 123 (operation 4003). Based on the intermediate decision parameter d 124, the processor 104 may change a structure of the machine learning model 122 to generate a modified machine learning model 126 to perform a modified generative process that is conditioned upon (e.g., conditioned on) the intermediate decision parameter d 124(operation 4004). The modified machine learning model 126 may generate a second output y 125 including content associated with the input c 121 (operation 4005).

Accordingly, aspects of some embodiments of the present disclosure may provide improvements to AI by leveraging variational generative aspects in the processing of a machine learning models to achieve: efficient processing; efficient computational efficiency; reduced latency; reduced power consumption; enhanced flexibility and interpretability; improved accuracy and/or generative quality (e.g., by explicitly modeling intermediate factors that influence the data generation process); and/or the like. Additionally, aspects of some embodiments of the present disclosure may provide for an add-on structure for improving a machine-learning model.

Example embodiments of the disclosure may extend to the following statements, without limitation:

Statement 1. An example method includes: performing, by a machine learning model, a generative process to predict a first output, generating, via a processor, a latent space based on an input to the machine learning model, determining, via the processor, an intermediate decision parameter based on the latent space, based on the intermediate decision parameter, changing, via the processor, a structure of the machine learning model to generate a modified machine learning model to perform a modified generative process that is conditioned upon the intermediate decision parameter, and generating, by the modified machine learning model, a second output including content associated with the input.

Statement 2. An example method includes the method of statement 1, wherein the second output is conditioned upon a latent variable and the intermediate decision parameter.

Statement 3. An example method includes the method of any of statements 1 and 2, wherein generating the latent space includes embedding the input and a previously generated output from the machine learning model into a data distribution.

Statement 4. An example method includes the method of statement 3, wherein the intermediate decision parameter is determined based on the input and a relationship inferred from the embedding.

Statement 5. An example method includes the method of any of statements 1-4, wherein determining the intermediate decision parameter includes sampling the latent space based on a latent variable.

Statement 6. An example method includes the method of any of statements 1-5, wherein the changing the structure of the machine learning model includes modifying the generative process to infer an indirect relationship between the latent variable and the second output.

Statement 7. An example method includes the method of any of statements 1-6, wherein the machine learning model is a large language model.

Statement 8. An example method includes the method of any of statements 1-7, wherein the changing the structure of the machine learning model includes performing a structured pruning task for the large language model.

Statement 9. An example method includes the method of any of statements 1-8, wherein the changing the structure of the machine learning model includes applying a structured pruning task to dynamically prune a large language model utilizing rules conditioned on the intermediate decision parameter.

Statement 10. An example method includes the method of statement 9, wherein the applying the structured pruning task dynamically removes from the large language model at least one of parameters, heads, nodes, edges, or weights.

Statement 11. An example method includes the method of any of statements 9 and 10, wherein the applying the structured pruning task generates a pruned large language model that is reduced in size from the large language model and generates an output that is conditioned upon the intermediate decision parameter.

Statement 12. An example method includes the method of any of statements 8-11, wherein the structured pruning task includes rules conditioned on the intermediate decision parameter and the latent variable.

Statement 13. An example method includes the method of any of statements 1-12 and further includes determining a second intermediate decision parameter based on a second latent variable and based on a second intermediate decision parameter, and generating a structured modification task conditioned upon the second intermediate decision parameter.

Statement 14. An example method includes the method of any of statements 1-13 wherein the content includes automatically generated images, text, audio, and video based on the input.

Statement 15. An example system for performing the method of any of statements 1-14 includes a processing circuit, and a memory storing instructions, which, based on being executed by the processing circuit, cause the processing circuit to perform the method of any of statements 1-14.

Statement 16. An example device for performing the method of any of statements 1-14 includes one or more processors that are configured to perform the method of any of statements 1-14.

**Claims**

1. A method (3000, 4000) for modifying a machine learning model (122), the method (3000, 4000) comprising:

   performing (4001), by a machine learning model (122), a generative process to predict a first output;
   generating (4002), via a processor (110), a latent space (129) based on an input (121) to the machine learning model (122);
   determining (4003), via the processor (110), an intermediate decision parameter (124) based on the latent space (129);
   based on the intermediate decision parameter (124), changing (4004), via the processor (110), a structure of the machine learning model (122) to generate a modified machine learning model (126) to perform a modified generative process that is conditioned upon the intermediate decision parameter (124); and
   generating (4005), by the modified machine learning model (126), a second output comprising content associated with the input (121).

2. The method (3000, 4000) of claim 1, wherein the second output is conditioned upon a latent variable (123) and the intermediate decision parameter (124).

3. The method (3000, 4000) of claim 1 or 2, wherein generating the latent space (129) comprises embedding the input (121) and a previously generated output (125) from the machine learning model (122) into a data distribution.

4. The method (3000, 4000) of claim 3, wherein the intermediate decision parameter (124) is determined based on the input (121) and a relationship inferred from the embedding.

5. The method (3000, 4000) of any one of the previous claims, wherein determining the intermediate decision parameter (124) comprises sampling the latent space (129) based on a latent variable (123).

6. The method (3000, 4000) of claim 5, wherein the changing the structure of the machine learning model (122) comprises modifying the generative process to infer an indirect relationship between the latent variable (123) and the second output.

7. The method (3000, 4000) of claim 6, wherein the machine learning model (122) is a large language model, wherein, optionally, the changing the structure of the machine learning model (122) comprises:

   a) performing a structured pruning task for the large language model (162), and
   b) preferably applying the structured pruning task to dynamically prune the large language model (162) utilizing rules conditioned on the intermediate decision parameter (124).

8. The method (3000, 4000) of claim 7, wherein the applying the structured pruning task:

a) dynamically removes from the large language model (162) at least one of parameters, heads, nodes, edges, or weights,
b) preferably generates a pruned large language model (166) that is reduced in size from the large language model (162) and generates an output (125) that is conditioned upon the intermediate decision parameter, and
c) more preferably comprises rules conditioned on the intermediate decision parameter (124) and the latent variable (123).

9. The method (3000, 4000) of claim 8, further comprising:

determining a second intermediate decision parameter based on a second latent variable (123) and based on a second intermediate decision parameter; and
generating a structured modification task conditioned upon the second intermediate decision parameter.

10. The method (3000, 4000) of any one of the previous claims, wherein the content comprises automatically generated images, text, audio, and video based on the input (121).

11. A device (100) comprising:
one or more processors (110) that are configured to perform:

a generative process to predict a first output using a machine learning model (122);
generating a latent space (129) based on an input (121) to the machine learning model (122);
determining an intermediate decision parameter (124) based on the latent space (129);
based on the intermediate decision parameter (124), changing a structure of the machine learning model (122) to generate a modified machine learning model (126) to perform a modified generative process that is conditioned upon the intermediate decision parameter (124); and
generating, based on the modified machine learning model (126), a second output comprising content associated with the input (121).

12. The device (100) of claim 11, wherein the one or more processors (110) are configured to perform the generating the second output conditioned upon the intermediate decision parameter (124).

13. The device (100) of claim 11 or 12, wherein the one or more processors (110) are further configured to perform the generating the latent space (129) by embedding the input (121) and a previously generated output (125) from the machine learning model (122) into a data distribution.

14. The device (100) of any one of claims 11 to 13, wherein the one or more processors (110) are further configured to perform the determining the intermediate decision parameter (124) by sampling the latent space (129) based on a latent variable (123).

15. The device (100) of any one of claims 11 to 14, wherein the one or more processors (110) are further configured to perform the changing the structure of the machine learning model (122) by performing a structured pruning task.

FIG. 1A

FIG. 1B

FIG. 2

3000

3002

Embed, by a processor, input and output for a machine learning (ML) model into a latent space

3004

Determine, by the processor, an intermediate decision parameter d based on a sampling of the latent space

3006

Determine, by the processor, at least one dynamic and/or structured modification task based on the intermediate decision parameter

3008

Apply, by the processor, the at least one dynamic and/or structured modification task to the ML model

FIG. 3

4000 ⌐↘

4001 ⌐
```
Perform, by a machine learning model, a generative process to
predict a first output
```

4002 ⌐
```
Generate, by a processor, a latent space based on an input to the
machine learning model
```

4003 ⌐
```
Determine, by the processor, an intermediate decision parameter based
on the latent space and based on a latent variable
```

4004 ⌐
```
Change, by the processor, a structure of the machine learning model to
generate a modified machine learning model based on the intermediate
decision parameter
```

4005 ⌐
```
Generate, by the modified machine learning model, a second output
comprising content associated with the input
```

FIG. 4

Europäisches
Patentamt

European
Patent Office

Office européen
des brevets

# EUROPEAN SEARCH REPORT

**Application Number**

EP 25 17 5624

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU ZEJIAN ET AL: "EBERT: Efficient BERT Inference with Dynamic Structured Pruning", FINDINGS OF THE ASSOCIATION FOR COMPUTATIONAL LINGUISTICS: ACL-IJCNLP 2021, 1 January 2021 (2021-01-01), pages 4814-4823, XP093323957, DOI: 10.18653/v1/2021.findings-acl.425 * the whole document * | 1-15 | INV. G06N3/0455 G06N3/047 G06N3/0475 G06N3/082 |
| X,P | CN 119 202 945 A (THIRD RES INST MINISTRY PUBLIC SECURITY) 27 December 2024 (2024-12-27) * the whole document * | 8-10 | |

**TECHNICAL FIELDS SEARCHED (IPC)**

G06N

The present search report has been drawn up for all claims

| Place of search | Date of completion of the search | Examiner |
|---|---|---|
| The Hague | 13 October 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 17 5624

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2025

| Patent document cited in search report | Publication date | Patent family member(s) | Publication date |
|---|---|---|---|
| CN 119202945    A | 27-12-2024 | NONE | |

EPO FORM P0459

For more details about this annex : see Official Journal of the European Patent Office, No. 12/82